# EUROPÄISCHE PATENTSCHRIFT

(11) **EP 3 409 526 B1**
(45) Veröffentlichungstag und Bekanntmachung des Hinweises auf die Patenterteilung: **02.09.2020**
(21) Anmeldenummer: 18172220.8
(22) Anmeldetag: 15.05.2018
(51) Int. Cl.: B60K 35/00, B60K 37/02, B60K 31/00

(54) **ANZEIGEVORRICHTUNG EINES FAHRERASSISTENZSYSTEMS EINES KRAFTFAHRZEUGS**
DISPLAY DEVICE OF A DRIVER ASSISTANCE SYSTEM FOR A MOTOR VEHICLE
DISPOSITIF D'AFFICHAGE D'UN SYSTÈME D'AIDE À LA CONDUITE D'UN VÉHICULE AUTOMOBILE

(30) Priorität: 01.06.2017 DE 102017112064
(43) Veröffentlichungstag der Anmeldung: 05.12.2018
(73) Patentinhaber: MAN Truck & Bus SE, 80995 München (DE)
(72) Erfinder: Mohra, Holger, 80805 München (DE); Güllich, Johannes, 85229 Markt Indersdorf (DE); Michel, Britta, 81675 München (DE); Zimmermann, Andreas, 80995 München (DE)
(74) Vertreter: v. Bezold & Partner Patentanwälte - PartG mbB

(56) Entgegenhaltungen:
- DE-A1-102012 008 855
- DE-U1- 29 703 902
- US-B2- 9 283 844

## Beschreibung

Die Erfindung betrifft eine Anzeigevorrichtung eines Fahrerassistenzsystems eines Kraftfahrzeugs, umfassend eine Anzeigefläche und eine mit der Anzeigefläche gekoppelte Steuereinrichtung zum Steuern einer Anzeige auf der Anzeigefläche. Die Erfindung betrifft ferner ein Kraftfahrzeug, insbesondere ein Nutzfahrzeug, mit einer derartigen Anzeigevorrichtung.

In Fahrzeugen und insbesondere in Kraftfahrzeugen werden Anzeigeinstrumente benutzt, um dem Fahrer aktuelle Werte, das Fahrzeug oder die Umgebung betreffend, darzustellen. Beispielsweise werden so die Geschwindigkeit des Fahrzeugs, die Drehzahl des Motors, die Temperatur des Motors oder der Tankfüllstand dargestellt. Die Darstellung erfolgt häufig mit sogenannten "Instrumententuben". In modernen Fahrzeugen werden zur Darstellung der aktuellen Fahrzeug- bzw. Umgebungswerte oder -bilder sogenannte "Kombi-Instrumente" verwendet. Sie besitzen einen großen Bildschirm, auf dem Bilder und virtuelle Instrumente dargestellt werden können. Dabei werden Anzeigeinstrumente beispielsweise als virtuelle (digitale) Instrumententuben mit einem Skalenring dargestellt.

Nutzfahrzeuge besitzen im Gegensatz zu herkömmlichen Fahrzeugen Assistenzsysteme für Spezialfunktionen, wie z. B. einen Retarder, eine Bremsomat-Funktion, oder eine Anpassbremsung (bergab).

Moderne, insbesondere im Fernverkehr eingesetzte Nutzfahrzeuge, sind beispielsweise mit einer Geschwindigkeitsregelanlage ausgestattet, die zwei unabhängig voneinander arbeitende Geschwindigkeitsregler umfasst. Ein erster Regler (auch Fahrgeschwindigkeitsregler, Tempopilot oder Tempomat® genannt) regelt über den Antriebsstrang, beispielsweise über die Kraftstoffzufuhr im Motor, die Geschwindigkeit des Fahrzeugs auf eine erste Sollgeschwindigkeit. Diese erste Regelfunktion wird in diesem Dokument auch als Tempopilot-Funktion bezeichnet.

Ein zweiter Regler (auch Bremsgeschwindigkeitsregler oder Bremsomat genannt) regelt über eine Bremseinrichtung des Fahrzeugs die Fahrzeuggeschwindigkeit so, dass eine zweite Sollgeschwindigkeit, die über der vorstehend genannten ersten Sollgeschwindigkeit des ersten Reglers liegt, nicht überschritten wird. Dadurch kann verhindert werden, dass Fahrzeuge, insbesondere schwere Nutzfahrzeuge, bei Fahrten auf Gefällestrecken auch ohne Kraftstoffzufuhr, d. h. im nicht befeuerten Betrieb, durch den Hangabtrieb zu weit über die Wunschgeschwindigkeit (erste Sollgeschwindigkeit) hinaus beschleunigen. Vorzugsweise stellt der Bremsgeschwindigkeitsregler das Einhalten der zweiten Sollgeschwindigkeit mittels einer verschleißfreien Dauerbremse (auch als geregelte Dauerbremse bezeichnet) sicher und nicht mittels der normalen Betriebsbremse. Diese zweite Regelfunktion wird nachfolgend auch als Bremsomat-Funktion bezeichnet.

Die Tempopilot-Funktion passt somit das Motormoment an, um eine vorgegebene Wunschgeschwindigkeit des Fahrers einzuhalten. Die Bremsomat-Funktion leitet alternativ eine Bremswirkung bei Bergabfahrten ein, bei denen das Fahrzeug aufgrund seines eigenen Gewichts beschleunigt. Aus der EP 1 288 056 B1 ist insbesondere ein Verfahren zur Steuerung der Fahrzeuggeschwindigkeit in Kombination mit einer solchen Bremsomat- und/oder Tempomat-Funktion offenbart, wobei die Bremsomat-Sollgeschwindigkeit und/oder die Tempomat-Sollgeschwindigkeit dynamisch in Abhängigkeit von beispielsweise Topographiedaten verändert werden. Dadurch kann die kraftstoffsparende Wirkung derartiger Tempomaten weiter verbessert werden.

Aus der Praxis ist es bekannt, zur Anzeige von Informationen einer derartigen Bremsomat-Funktion in Kombi-Instrumenten mit Skalenringen die Fläche außerhalb der Skalenringe zu nutzen, beispielsweise die Fläche zwischen den Skalenringen von Tachometer und Drehzahlmesser. Nachteilig hieran ist, dass durch die wachsende Anzahl von Anzeigen und Meldungen die Anzeige in einem Kombiinstrument schnell unübersichtlich erscheint und der Fahrer zur Erfassung von inhaltlich verwandten Funktionen unterschiedliche Bereiche der Anzeigefläche erfassen muss.

Das Dokument US 9,283,844 B2 beschreibt ein System zur Steuerung der Fahrzeuggeschwindigkeit in Abhängigkeit von einem aktuellen Fahrzeuggeschwindigkeitswert. Ein Tachometer zeigt sowohl die aktuelle Fahrzeuggeschwindigkeit als auch eine gespeicherte Set-Fahrzeuggeschwindigkeit an, wobei die Fahrzeuggeschwindigkeit durch eine "resume"-Funktion auf die Set-Fahrzeuggeschwindigkeit geregelt werden kann. Das System umfasst ferner einen Hang-Steuer-Modus, innerhalb dessen ein Bremsmoment zur Aufrechterhaltung der Set-Fahrzeuggeschwindigkeit genutzt wird.

Es ist somit Aufgabe der Erfindung, eine verbesserte Anzeigevorrichtung eines Fahrerassistenzsystems eines Kraftfahrzeugs bereitzustellen, mit der Nachteile bekannter Anzeigenvorrichtungen vermieden werden können. Es ist insbesondere eine Aufgabe der Erfindung, eine Anzeigevorrichtung zur Darstellung von Informationen einer Bremsomat-Funktion des Kraftfahrzeugs bereitzustellen, mit der eine platzsparende Darstellungsform und eine schnelle Erfassung der Informationen durch den Nutzer ermöglicht wird.

Diese Aufgabe wird durch eine Anzeigevorrichtung mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß allgemeinen Gesichtspunkten der Erfindung wird eine Anzeigevorrichtung eines Fahrerassistenzsystems eines Kraftfahrzeugs bereitgestellt, umfassend eine Anzeigefläche und eine mit der Anzeigefläche gekoppelte Steuereinrichtung zum Steuern einer Anzeige auf der Anzeigefläche. Das Fahrerassistenzsystem kann eine Geschwindigkeitsregelanlage sein, die insbesondere eine Bremsomat-Funktion und eine Tempopilot-Funktion umfasst.

Die Steuereinrichtung ist eingerichtet, auf der Anzeigefläche eine Geschwindigkeitsanzeige (Tachometer) zur Darstellung einer Momentangeschwindigkeit des Kraftfahrzeugs anzuzeigen. Die Steuereinrichtung ist ferner eingerichtet, bei Aktivierung einer Bremsomat-Funktion eine Bremsomat-Geschwindigkeitsanzeige zur Darstellung einer eingestellten Sollgeschwindigkeit der Bremsomat-Funktion anzuzeigen, wobei die Bremsomat-Geschwindigkeitsanzeige in die Geschwindigkeitsanzeige integriert ist.

Ein besonderer Vorzug dieses Ansatzes liegt darin, dass eine Integration der Bremsomat-Geschwindigkeitsanzeige in die Geschwindigkeitsanzeige einen schnellen Vergleich durch den Fahrer von der eingestellten Sollgeschwindigkeit der Bremsomat-Funktion mit der tatsächlichen Fahrgeschwindigkeit ermöglicht. Dadurch kann die Wahrscheinlichkeit einer Fehlinterpretation der Informationen verringert werden, da der Fahrer den Zusammenhang der verschiedenen Informationen zueinander (z. B. Sollgeschwindigkeit der Bremsomat-Funktion im Zusammenhang mit der Momentangeschwindigkeit) ohne Interpretationsspielraum nachvollziehen kann. Ein weiterer wichtiger Vorteil ist, dass dadurch Anzeigeplatz gespart werden kann, da verschiedene Anzeige in Kombination dargestellt werden.

Unter einer Integration der Bremsomat-Geschwindigkeitsanzeige in die Geschwindigkeitsanzeige wird verstanden, dass die eingestellte Sollgeschwindigkeit der Bremsomat-Funktion direkt am Tachometer visualisiert wird bzw. an der gleichen Stelle der Anzeigefläche wie die Geschwindigkeitsanzeige angezeigt wird, z. B. unmittelbar an, benachbart und/oder unter Bezugnahme auf eine Skala der Geschwindigkeitsanzeige.

Eingangs wurde bereits erwähnt, dass unter einer Bremsomat-Funktion eine Funktion verstanden wird, die über eine Bremseinrichtung des Fahrzeugs die Bremsomat-Sollgeschwindigkeit einregelt. Die Bremsomat-Funktion wird auch als Bremsgeschwindigkeitsregelungsystem des Kraftfahrzeugs bezeichnet.

Eine bevorzugte Ausführungsform der Anzeigevorrichtung sieht vor, dass die Bremsomat-Geschwindigkeitsanzeige ein entlang einer Skala der Geschwindigkeitsanzeige anzeigbares, insbesondere bewegbares Markierungselement umfasst. Die Bremsomat-Geschwindigkeitsanzeige kann auch lediglich durch ein solches Markierungselement gebildet sein. Das Markierungselement kann ein grafisches Symbol, z. B. ein Pfeil, ein Dreieck, ein Piktogramm umfassen oder als solches ausgeführt sein. Das Markierungselement wird insbesondere derart an der Skala der Geschwindigkeitsanzeige angezeigt, dass das Markierungselement eine Geschwindigkeit auf der Skala markiert. Beispielsweise kann das Markierungselement an der Stelle der Skala angezeigt werden, die der Sollgeschwindigkeit der Bremsomat-Funktion entspricht. Dies zeigt die Bremsomat-Sollgeschwindigkeit an.

Dies ermöglicht eine besonders platzsparende Anzeige der Bremsomat-Sollgeschwindigkeit, da die Skala zur Anzeige der Momentangeschwindigkeit ausgenutzt wird. Ferner sinkt die Wahrscheinlichkeit der Fehlinterpretation der Informationen, weil der Fahrer die Informationen in der logisch zugehörigen Skala präsentiert bekommt.

Ferner kann die Bremsomat-Geschwindigkeitsanzeige einen entlang einer Skala der Geschwindigkeitsanzeige anzeigbaren alphanumerischen Wert umfassen, der die Höhe der eingestellten Bremsomat-Sollgeschwindigkeit angibt. Der Wert kann anstelle oder vorzugsweise zusätzlich zu dem Markierungselement angezeigt werden, vorzugsweise benachbart zu diesem. Diese Variante erfordert mehr Anzeigeplatz, reduziert aber die Wahrscheinlichkeit der Fehlinterpretation der Informationen weiter, weil der Fahrer die Information direkt als Wert präsentiert bekommt.

Erfindungsgemäß ist die Steuereinrichtung ausgebildet, bei aktivierter Bremsomat-Funktion und aktivierter Tempopilot-Funktion des Kraftfahrzeugs an einer Skala der Geschwindigkeitsanzeige ein erstes Markierungselement, das eine eingestellte Sollgeschwindigkeit einer Tempopilotfunktion des Kraftfahrzeugs markiert, und ein zweites Markierungselement, das die Bremsomat-Sollgeschwindigkeit markiert, anzuzeigen. Zur besseren Unterscheidbarkeit werden das erste und das zweite Markierungselement visuell unterschiedlich dargestellt, z. B. unterscheiden sie sich in ihrer Farbgebung, Helligkeit, Beschriftung, und/oder Symbol-Darstellung. Der Fahrer kann somit schnell beide Sollgeschwindigkeiten sowie die Momentangeschwindigkeit erfassen. Eine platzsparende Darstellung wird ermöglicht.

Gemäß einer weiteren Ausführungsform ist die Steuereinrichtung ausgebildet, bei einer Anpassbremsung im Dauerbremsbetrieb, insbesondere auf einer Gefällestrecke, die Bremsomat-Geschwindigkeitsanzeige zu aktivieren oder zu ändern. Die Bremsomat-Sollgeschwindigkeit wird auf diejenige Geschwindigkeit festgelegt, die beim Loslassen des Bremspedals gefahren wird.

Wie eingangs erwähnt, sind aus der Praxis Nutzfahrzeuge wohlbekannt, die eine Anpassbremsung ermöglichen. Hierbei kann die Bremsomat-Funktion ausgebildet sein, bei Betätigung des Betriebsbremspedals im Gefälle die Geschwindigkeit, die beim Loslassen des Pedals gefahren wird und damit durch die Anpassbremsung eingestellt wurde, zu erfassen und als neue oder geänderte Bremsomat-Sollgeschwindigkeit festzulegen. Die Bremsomat-Sollgeschwindigkeit wird dann durch die Dauerbremse des Nutzfahrzeugs, z. B. durch dosierten Einsatz von Retarder und Motorbremse, im Gefälle gehalten.

Es ist vorteilhaft, wenn das Markierungselement der Bremsomat-Geschwindigkeitsanzeige, das bei aktivierter Tempopilot-Funktion angezeigt wird, visuell unterscheidbar ist von dem Markierungselement der Bremsomat-Geschwindigkeitsanzeige, das bei deaktivierter Tempopilot-Funktion und nach einer Anpassbremsung angezeigt wird. Die visuelle Unterscheidbarkeit kann durch unterschiedliche Farbkodierung erreicht werden. Dadurch wird verdeutlicht, auf welchen Modus sich die Anzeige bezieht.

Gemäß einer vorteilhaften Variante dieser Ausführungsform ist die Steuereinrichtung ferner ausgebildet, eine durch eine Anpassbremsung verursachte Änderung der Sollgeschwindigkeit der Bremsomat-Funktion durch eine entsprechende Bewegung des Markierungselements entlang der Skala der Geschwindigkeitsanzeige zu visualisieren. Dadurch wird dem Fahrer intuitiv die Anpassung der Sollgeschwindigkeit der Bremsomat-Funktion angezeigt.

Gemäß einem weiteren Aspekt können zur Darstellung der Bremsomat-Sollgeschwindigkeit, die durch die Anpassbremsung festgelegt ist und zur Darstellung der Bremsomat-Sollgeschwindigeit, die bei gleichzeitig aktivierten Tempopilot-funktion angezeigt wird, unterschiedliche Markierungselemente verwendet werden. Auf diese Weise kann der Fahrer diese unterschiedlichen Bremsomat-Sollgeschwindigkeiten besser unterscheiden, auch wenn diese in der Regel nicht gleichzeitig angezeigt werden, da eine Anpassbremsung in der Regel die Tempopilot-Funktion deaktiviert.

Die Anzeigefläche der Anzeigevorrichtung kann ein Bildschirm bzw. ein Display sein, auf dem Bilder und virtuelle Instrumente dargestellt werden können. Die Anzeigevorrichtung kann als Kombi-Instrument ausgeführt sein. Die Anzeigefläche kann ferner dazu genutzt werden, eine Motordrehzahl darzustellen, wobei die aktuelle Motordrehzahl unter Verwendung einer Skala angezeigt wird.

Gemäß einem weiteren Aspekt kann die Steuereinrichtung ausgebildet sein, bei aktivierter Tempopilot-Funktion entlang einer Skala der Geschwindigkeitsanzeige einen Bereich oberhalb und unterhalb der eingestellten Tempopilot-Sollgeschwindigkeit anzuzeigen, der von einer GPS-basierten Tempopilotfunktion unter Berücksichtigung von vorausliegenden Gefälle- und Höheinformationen der Fahrstrecke ausgenutzt werden kann.

Derartige vorausschauende, das vorausliegende topographische Streckenprofil berücksichtigende Tempopilotfunktionen sind an sich aus dem Stand der Technik bekannt. Hierbei kann zur Kraftstoffeinsparung die Momentangeschwindigkeit vor einer Steigung in vorgegebenen Grenzen (vorbestimmter Bereich oberhalb der eingestellten Tempopilot-Sollgeschwindigkeit) über die eingestellte Tempopilot-Sollgeschwindigkeit hinaus erhöht werden und vor Gefällestrecken in vorgegebenen Grenzen (vorbestimmter Bereich unterhalb der eingestellten Tempopilot-Sollgeschwindigkeit) unter die eingestellte Tempopilot-Sollgeschwindigkeit verringert werden.

Die Integration dieses Bereichs der GPS-basierten Tempopilotfunktion oberhalb und unterhalb der eingestellten Tempopilot-Sollgeschwindigkeit in die Geschwindigkeitsanzeige zusammen mit der Bremsomat-Geschwindigkeitsanzeige bietet den Vorteil, dass eine weitere inhaltlich verwandte Funktion bzw. Anzeige gestalterisch in den gleichen Zusammenhang gesetzt wird. So kann einerseits eine weitere Platzeinsparung erzielt werden. Andererseits kann die Wahrscheinlichkeit der Fehlinterpretation dieser Informationen gesenkt werden, weil der Fahrer die Information in der logisch zugehörigen Skala präsentiert bekommt.

Eine vorteilhafte platzsparende Variante dieser Ausführungsform sieht vor, dass der Bereich oberhalb und unterhalb der eingestellten Tempopilot-Sollgeschwindigkeit durch einen Kreisbogen dargestellt ist, insbesondere durch einen Kreisbogen, der Teil des vom drehbaren Zeiger der Geschwindigkeitsanzeige beschriebenen Kreises ist. Der Bereich oberhalb und unterhalb der eingestellten Tempopilot-Sollgeschwindigkeit kann auch in einem anderen Format dargestellt sein, beispielsweise in einem Säulenformat. Ferner kann der Bereich oberhalb und unterhalb der eingestellten Tempopilot-Sollgeschwindigkeit durch eine oberhalb der Tempopilot-Sollgeschwindigkeit liegende obere Grenzgeschwindigkeit und eine unterhalb der Tempopilot-Sollgeschwindigkeit liegende untere Grenzgeschwindigkeit markiert sein. Hierfür können beispielsweise Markierungselemente verwendet werden, die visuell, z. B. durch die Farbgebung, Helligkeit, Beschriftung, und/oder Symbol-Darstellung von dem Markierungselement der Bremsomat-Geschwindigkeitsanzeige unterscheidbar sind.

Gemäß einer weiteren Ausführungsform kann die Bremsomat-Geschwindigkeitsanzeige einen Bremsomat-Spreizbereich darstellen, der in Abhängigkeit von der eingestellten Tempopilot-Sollgeschwindigkeit mögliche einstellbare Werte der Bremsomat-Sollgeschwindigkeit angibt.

Die Sollgeschwindigkeit der Bremsomat-Funktion liegt in der Regel bei aktivierter Tempopilot-Funktion um einen festen Wert (auch als Offset oder Spreizung bezeichnet) über der Sollgeschwindigkeit der Tempopilot-Funktion. Dies stellt sicher, dass die beiden Regelsysteme zusammen und unabhängig voneinander arbeiten können und sich nicht gegenseitig störend beeinflussen. Der Bremsomat-Spreizbereich gibt den einstellbaren Bereich der Sollgeschwindigkeit der Bremsomat-Funktion unter Einhaltung der Spreizung /des Offsets an.

Die Steuereinrichtung kann ausgebildet sein, zur Darstellung der Momentangeschwindigkeit ein digitales Rundinstrument, auch als virtuelles Rundinstrument bezeichnet, zu verwenden. Das digitale Rundinstrument weist eine gekrümmte Drehzahlskala, insbesondere eine Rundfeldskala oder Halbrundfeldskala, und einen drehbaren Zeiger, dessen Position auf der Drehzahlskala die Momentangeschwindigkeit des Kraftfahrzeugs angibt, auf. Gemäß einem anderen Aspekt kann die Steuereinrichtung ausgebildet sein, zur Darstellung der Momentangeschwindigkeit ein anderes digitales Skaleninstrument zu verwenden, beispielsweise unter Darstellung einer Langfeldskala.

Die Erfindung betrifft ferner ein Kraftfahrzeug, insbesondere Nutzfahrzeug, aufweisend eine Anzeigevorrichtung nach einem der vorhergehenden Ansprüche.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Anzeigevorrichtung gemäß einer Ausführungsform der Erfindung; und
- Figur 2: eine Geschwindigkeitsanzeige mit integrierter Bremsomat-Geschwindigkeitsanzeige gemäß einem Ausführungsbeispiel.

Gleiche oder funktional äquivalente Elemente sind in allen Figuren mit denselben Bezugszeichen bezeichnet und sind zum Teil nicht gesondert beschrieben.

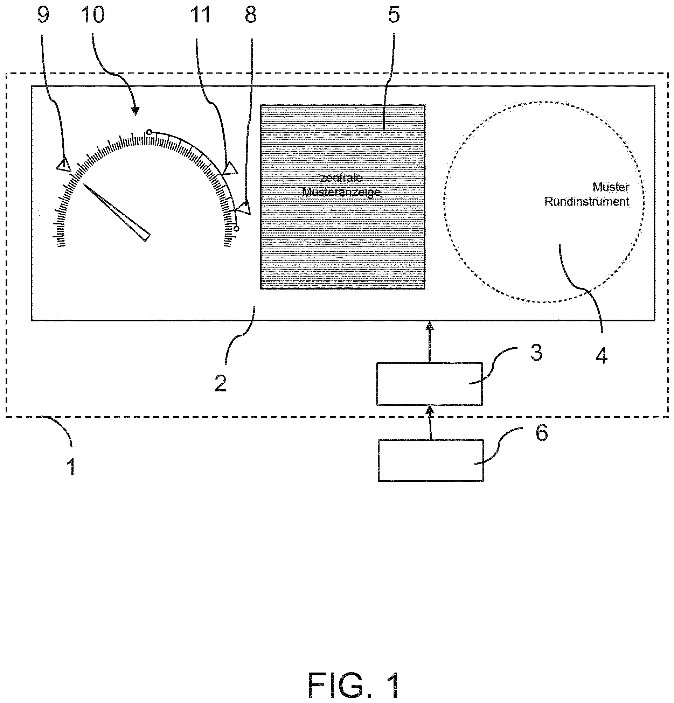

Figur 1 zeigt schematisch eine Anzeigevorrichtung 1 gemäß einer Ausführungsform der Erfindung. Die Anzeigevorrichtung ist als Kombi-Instrument ausgeführt, das als Anzeigefläche 2 einen Bildschirm besitzt. Die Anzeigevorrichtung 1 umfasst ferner eine mit der Anzeigefläche 2 gekoppelte Steuereinrichtung 3 zum Steuern einer Anzeige von Informationen auf der Anzeigefläche 2. Die Steuereinrichtung 3 steht in Kommunikationsverbindung mit einem Fahrerassistenzsystem, z. B. über einen Fahrzeug-Datenbus. Das Fahrerassistenzsystem umfasst eine Geschwindigkeitsregelanlage mit einer Bremsomat-Funktion und einer Tempopilot-Funktion.

Die Darstellung auf der Anzeigefläche 2 kann über die Steuereinrichtung 3 gesteuert und je nach Fahrsituation und Betriebsmodus des Fahrzeugs angepasst werden. Figur 1 zeigt lediglich beispielhaft eine mögliche Aufteilung der Anzeigenfläche 2, auf der zwei virtuelle Rundinstrumente und dazwischen in einem mittleren Zentralbereich ein weiterer Anzeigebereich 5 vorgesehen ist, indem beispielsweise Informationen eines Navigationsgeräts oder Werte vom Fahrzeugbetriebsparametern oder die Umgebung betreffend dargestellt werden können. Eines der Rundinstrumente kann beispielsweise zur Darstellung einer Geschwindigkeitsanzeige 10 in Form eines virtuellen Tachometers bzw. Geschwindigkeitsmessers verwendet werden. Das andere Rundinstrument kann beispielsweise zur Ausbildung einer virtuellen Drehzahlanzeige 4 in Form eines virtuellen Rundinstruments verwendet werden. Der Begriff Rundinstrument soll auch Darstellungen als Halbrund-Instrument und generell Anzeigen mit gekrümmter Skala umfassen.

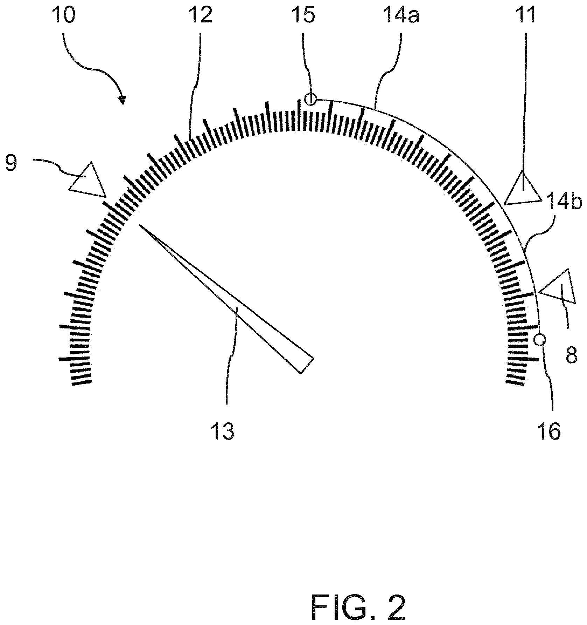

In die Geschwindigkeitsanzeige 10 ist eine Bremsomat-Geschwindigkeitsanzeige integriert, was anhand von Figur 2 erläutert wird, die die Geschwindigkeitsanzeige 10 der Figur 1 vergrößert zeigt.

Die Steuereinrichtung 3 ist ausgebildet, als Geschwindigkeitsanzeige 10 und zur Darstellung der Momentangeschwindigkeit ein digitales Rundinstrument zu verwenden, aufweisend eine gekrümmte Drehzahlskala 12 in Form einer Halbrundfeldskala und eines drehbaren Zeigers 13, dessen Position auf der Drehzahlskala 12 die Momentangeschwindigkeit des Kraftfahrzeugs angibt.

Die Bremsomat-Geschwindigkeitsanzeige wird in dem gezeigten Ausführungsbeispiel durch ein an der Skala 12 der Geschwindigkeitsanzeige 10 anzeigbares Markierungselement 8 oder 9 realisiert. Es wird wahlweise das Markierungselement 8 oder 9 angezeigt, je nachdem ob eine Tempopilot-Funktion aktiviert ist oder eine Anpassbremsung durchgeführt wurde.

Lediglich zur Vereinfachung der Darstellung sind in Figur 2 jedoch beide Fälle gleichzeitig dargestellt. Dies kann auch so verstanden werden, dass mit den Bezugszeichen 8 und 9 jeweils das gleiche Markierungselement zur Markierung der momentanen Sollgeschwindigkeit der Bremsomat-Funktion gekennzeichnet ist, wobei das Markierungselement 8 eine Position an der Skala 12 kennzeichnet, die das Markierungselement zur Bremsomat-Geschwindigkeitsanzeige bei aktivierter Tempopilot-Funktion einnimmt, und wobei das Markierungselement 9 eine Position an der Skala 12 kennzeichnet, die das Markierungselement bei deaktivierter Tempopilot-Funktion und Durchführung einer Anpassbremsung (siehe Erläuterungen weiter unten) einnimmt.

Die Steuereinrichtung 3 ist eingerichtet, bei aktivierter Bremsomat-Funktion und gleichzeitig aktivierter Tempopilot-Funktion des Kraftfahrzeugs an einer Skala der Geschwindigkeitsanzeige zwei Markierungselemente 8, 11 anzuzeigen.

Das Markierungselement 11 markiert durch seine Stelle an der Skala 12 die eingestellte Sollgeschwindigkeit einer Tempopilotfunktion des Kraftfahrzeugs. Das Markierungselement 8 markiert durch seine Stelle an der Skala 12 die eingestellte Bremsomat-Sollgeschwindigkeit, die um mindestens einen Offset-Wert oberhalb der eingestellten Sollgeschwindigkeit einer Tempopilotfunktion liegt.

Die beiden Markierungselemente 8, 11 sind hierbei visuell unterschiedlich dargestellt. Sie unterscheiden sich beispielsweise in ihrer Farbgebung.

Die Steuereinrichtung 3 ist ferner ausgebildet, bei einer Anpassbremsung im Dauerbremsbetrieb, insbesondere auf einer Gefällestrecke, die Bremsomat-Geschwindigkeitsanzeige 9 zu aktivieren oder zu ändern. Die Bremsomat-Geschwindigkeitsanzeige 9 zu ändern bedeutet hier, dass ein durch die Anpassbremsung geänderter Wert der Sollgeschwindigkeit der Bremsomat-Funktion durch entsprechende Anpassung der Position der Markierung 9 an der Skala 12 dargestellt wird.

Hierbei kann die Anpassbremsung die Tempopilot-Funktion deaktivieren. Hierbei kann die Markierung 11 nicht mehr dargestellt werden, wenn die Markierung 9 dargestellt ist und umgekehrt.

Eine alternative Möglichkeit ist, dass bei einer Anpassbremsung die Tempopilot-Funktions-Markierung 11 weiterhin dargestellt wird, jedoch in einer visuell veränderten Darstellung, z. B. in einer veränderten Farbe. Lediglich beispielhaft kann eine Darstellung in grauer Farbe und/oder eine Darstellung mit reduzierter Helligkeit sein, während die Sollgeschwindigkeit der Tempopilot-Funktion infolge der Anpassbremsung nicht mehr aktiv ist. Die zweite Markierung 9 der Anpassbremsung kann während der Anpassbremsung eine sichtbare Bewegung entlang der Skala der Geschwindigkeitsanzeige zu Werten kleineren Geschwindigkeiten bis zum geänderten Wert der Sollgeschwindigkeit entsprechend der Anpassbremsung ausführen. Die vor der Anpassbremsung eingestellte Sollgeschwindigkeit der Tempopilot-Funktion kann durch Betätigung eines hierfür vorgesehenen Betätigungselements, z. B. einer "Resume"-Taste, wieder reaktiviert bzw. eingestellt werden. Gemäß einem weiteren Aspekt kann nach Wiedereinstellung der vor der Anpassbremsung eingestellten Sollgeschwindigkeit der Tempopilot-Funktion das Markierungselement 9 wieder eine sichtbare Bewegung zurück entlang der Skala der Geschwindigkeitsanzeige ausführen. Somit bekommt der Fahrer den visuellen Hinweis, dass bei Reaktivierung der Sollgeschwindigkeit der Tempopilot-Funktion wieder die noch über die Markierung 11 gekennzeichnete Sollgeschwindigkeit der Tempopilot-Funktion angefahren wird.

Die Markierungselemente 8 und 9 sind in Figur 2 jeweils durch ein Pfeilsymbol bzw. eine Dreiecksform dargestellt. Durch unterschiedliche Farbkodierung der Markierungselemente 8 und 9 wird verdeutlicht, auf welchen Modus sich die Anzeige bezieht. Gemäß einer weiteren Variante (nicht dargestellt), kann das Markierungselement 9, das die Bresomat-Geschwindigkeitsanzeige nach einer Anpassbremsung anzeigt, beispielsweise auch durch ein Piktogramm dargestellt werden, das schematisch ein Nutzfahrzeug darstellt, das auf einer Gefälltestrecke fährt.

Bei einer Anpassbremsung, z. B. durch Betätigung des Betriebsbremspedals im Gefälle, speichert die Bremsomat-Funktion die Geschwindigkeit, die beim Loslassen des Bremspedals gefahren wird (Anpassbremsung). Der gespeicherte Wert wird durch dosierten Einsatz von Retarder und Motorbremse im Gefälle gehalten. Die Stellung des Zeigers 13 der Geschwindigkeitsanzeige 10 in Figur 2 zeigt eine Situation nach einer Anpassbremsung, wobei die dadurch eingestellte Sollgeschwindigkeit der Bremsomat-Funktion der aktuellen Geschwindigkeit entspricht und durch die Bremsomat-Geschwindigkeitsanzeige in Form der Markierung 9 angezeigt ist.

Die Steuereinrichtung ist ausgebildet, bei aktivierter Tempopilot-Funktion entlang einer Skala 12 der Geschwindigkeitsanzeige 10 einen Bereich 14b oberhalb und einen Bereich 14a unterhalb der eingestellten Tempopilot-Sollgeschwindigkeit anzuzeigen, der von einer GPS-basierten Tempopilotfunktion unter Berücksichtigung von vorausliegenden Gefälle- und Höheinformationen der Fahrstrecke ausgenutzt werden kann. Die Bereiche 14a, 14b stellen somit einen Bereich der Hysterese oberhalb und unterhalb der Sollgeschwindigkeit 14 der Tempopilotfunktion 14 dar, der von einer vorausschauenden, das vorausliegende topographische Streckenprofil berücksichtigenden Tempopilot-Funktion ausgenutzt werden kann. Der Bereich 14a, 14b wird in dem gezeigten Beispiel durch einen Kreisbogen 14a, 14b dargestellt. Der Kreisbogen ist Teil des vom drehbaren Zeiger 13 der Geschwindigkeitsanzeige 10 beschriebenen Kreises. Der Bereich markiert durch Endpunkte zusätzlich eine oberhalb der Tempopilot-Sollgeschwindigkeit liegende obere Grenzgeschwindigkeit 16 und eine unterhalb der Tempopilot-Sollgeschwindigkeit liegende untere Grenzgeschwindigkeit 15.

### Bezugszeichenliste

- 1: Anzeigevorrichtung
- 2: Anzeigefläche
- 3: Steuereinrichtung
- 4: Rundinstrument zur Drehzahlanzeige
- 5: Zentraler Anzeigebereich
- 6: Fahrerassistenzsystem
- 8, 9: Markierung zur Bremsomat-Geschwindigkeitsanzeige
- 10: Geschwindigkeitsanzeige
- 11: Markierungselement zur Anzeige der Sollgeschwindigkeit einer TempopilotFunktion
- 12: Skala der Geschwindigkeitsanzeige
- 13: Zeiger
- 14a, 14b: Bereich
- 15: Untere Grenzgeschwindigkeit
- 16: Obere Grenzgeschwindigkeit

## Patentansprüche

1. Anzeigevorrichtung (1) eines Fahrerassistenzsystems eines Kraftfahrzeugs, umfassend eine Anzeigefläche (2) und eine mit der Anzeigefläche gekoppelte Steuereinrichtung (3) zum Steuern einer Anzeige auf der Anzeigefläche (2), wobei die Steuereinrichtung (3) eingerichtet ist, auf der Anzeigefläche (2)
- eine Geschwindigkeitsanzeige (10) zur Darstellung einer Momentangeschwindigkeit des Kraftfahrzeugs anzuzeigen, und
- bei Aktivierung einer Bremsomat-Funktion eine Bremsomat-Geschwindigkeitsanzeige (8; 9) zur Darstellung einer eingestellten Sollgeschwindigkeit der Bremsomat-Funktion anzuzeigen,
wobei die Bremsomat-Geschwindigkeitsanzeige (8; 9) in die Geschwindigkeitsanzeige (10) integriert ist, **dadurch gekennzeichnet, dass** die Steuereinrichtung (3) ausgebildet ist, bei aktivierter Bremsomat-Funktion und aktivierter Tempopilot-Funktion des Kraftfahrzeugs an einer Skala der Geschwindigkeitsanzeige ein erstes Markierungselement (11), das eine eingestellte Sollgeschwindigkeit einer Tempopilotfunktion des Kraftfahrzeugs markiert, und ein zweites Markierungselement (8), das die Bremsomat-Sollgeschwindigkeit markiert, anzuzeigen, wobei das erste (11) und das zweite (8) Markierungselement visuell unterschiedlich dargestellt werden und sich in ihrer Farbgebung, Helligkeit, Beschriftung und/oder Symbol-Darstellung unterscheiden.

2. Anzeigevorrichtung nach Anspruch 1, wobei die Bremsomat-Geschwindigkeitsanzeige ein entlang einer Skala (12) der Geschwindigkeitsanzeige (10) anzeigbares Markierungselement (8; 9) umfasst.

3. Anzeigevorrichtung (1) nach einem der vorhergehenden Ansprüche, wobei die Steuereinrichtung (3) ausgebildet ist, bei einer Anpassbremsung im Dauerbremsbetrieb, insbesondere auf einer Gefällestrecke, die Bremsomat-Geschwindigkeitsanzeige (9) zu aktivieren oder zu ändern.

4. Anzeigevorrichtung (1) nach den Ansprüchen 2 bis 3, wobei das Markierungselement (8) der Bremsomat-Geschwindigkeitsanzeige, das bei aktivierter Tempopilot-Funktion angezeigt wird, visuell unterscheidbar ist von dem Markierungselement (9) der Bremsomat-Geschwindigkeitsanzeige, das bei deaktivierter Tempopilot-Funktion und nach einer Anpassbremsung angezeigt wird.

5. Anzeigevorrichtung (1) nach den Ansprüchen 2 bis 4, wobei die Steuereinrichtung ausgebildet ist, eine durch eine Anpassbremsung verursachte Änderung der Sollgeschwindigkeit der Bremsomat-Funktion durch eine entsprechende Bewegung des Markierungselements (9) entlang der Skala (11) der Geschwindigkeitsanzeige (10) zu visualisieren.

6. Anzeigevorrichtung (1) nach einem der vorhergehenden Ansprüche, wobei die Steuereinrichtung (3) ausgebildet ist, zur Darstellung der Momentangeschwindigkeit ein digitales Rundinstrument zu verwenden, aufweisend eine gekrümmte Drehzahlskala (12), insbesondere eine Rundfeldskala oder Halbrundfeldskala, und einen drehbaren Zeiger (13), dessen Position auf der Drehzahlskala (12) den Momentangeschwindigkeitswert des Kraftfahrzeugs angibt.

7. Anzeigevorrichtung nach einem der vorhergehenden Ansprüche, wobei die Steuereinrichtung ausgebildet ist, bei aktivierter Tempopilot-Funktion entlang einer Skala (12) der Geschwindigkeitsanzeige (10) einen Bereich oberhalb (14b) und unterhalb (14a) der eingestellt Tempopilot-Sollgeschwindigkeit anzuzeigen, der von einer GPS-basierten Tempopilotfunktion unter Berücksichtigung von vorausliegenden Gefälle- und Höheinformationen der Fahrstrecke ausgenutzt werden kann.

8. Anzeigevorrichtung nach Anspruch 7, wobei der Bereich
a) durch einen Kreisbogen (14a, 14b) dargestellt ist, insbesondere einen Kreisbogen, der Teil des vom drehbaren Zeigers (13) der Geschwindigkeitsanzeige (10) beschriebenen Kreises ist; und/oder
b) durch eine oberhalb der Tempopilot-Sollgeschwindigkeit liegende obere Grenzgeschwindigkeit (16) und eine unterhalb der Tempopilot-Sollgeschwindigkeit liegende untere Grenzgeschwindigkeit (15) markiert ist.

9. Anzeigevorrichtung nach einem der vorhergehenden Ansprüche, wobei die Bremsomat-Geschwindigkeitsanzeige einen Bremsomat-Spreizbereich darstellt, der in Abhängigkeit von der eingestellten Tempopilot-Sollgeschwindigkeit mögliche einstellbare Werte der Bremsomat-Sollgeschwindigkeit angibt.

10. Anzeigevorrichtung nach einem der vorhergehenden Ansprüche, wobei die Bremsomat-Geschwindigkeitsanzeige einen entlang einer Skala (12) der Geschwindigkeitsanzeige (10) anzeigbaren alphanumerischen Wert umfasst, der die Höhe der eingestellten Bremsomat-Sollgeschwindigkeit angibt.

11. Kraftfahrzeug, insbesondere Nutzfahrzeug, aufweisend eine Anzeigevorrichtung (1) nach einem der vorhergehenden Ansprüche.

## Claims

1. A display device (1) of a drive assistance system of a vehicle, comprising a display area (2) and a control device (3) which is coupled to the display area and has the purpose of controlling a display on the display area (2), wherein the control device (3) is configured to display on the display area (2)
- a speed display (10) for representing an instantaneous speed of the vehicle, and
- an automatic brake control speed display (8; 9) for displaying a selected setpoint speed of the automatic brake control function when an automatic brake control function is activated,
wherein the automatic brake speed display (8; 9) is integrated into the speed display (10), **characterized in that** the control device (3) is designed to display, when the automatic brake control function and cruise control function of the motor vehicle is activated, a first marking element (11) on a scale of the speed display, which marking element (11) marks a selected setpoint speed of a cruise control function of the motor vehicle, and a second marking element (8) which marks the automatic brake control setpoint speed, wherein the first marking element (11) and the second marking element (8) are represented in visually different ways and differ in their colouring, brightness, lettering and/or symbol representation.

2. The display device according to Claim 1, wherein the automatic brake control speed display comprises a marking element (8; 9) which can be displayed along a scale (12) of the speed display (10).

3. The display device (1) according to one of the preceding claims, wherein the control device (3) is designed to activate or to change the automatic brake control speed display (9) in the case of adaptation braking in the continuous braking mode, in particular on a downhill route section.

4. The display device (1) according to Claims 2 to 3, wherein the marking element (8) of the automatic brake control speed display, which marking element is displayed when the cruise control function is activated, can be differentiated visually from the marking element (9) of the automatic brake control speed display which is displayed when the cruise control function is deactivated and after adaption braking.

5. The display device (1) according to Claims 2 to 4, wherein the control device is designed to visualize a change in the setpoint speed of the automatic brake control function which is caused by adaptation braking, through corresponding movement of the marking element (9) along the scale (11) of the speed display (10).

6. The display device (1) according to one of the preceding claims, wherein the control device (3) is designed to use, for the representation of the instantaneous speed, a digital round instrument having a curved rotational speed scale (12), in particular a round field scale or half-round field scale and a rotatable pointer (13) whose position on the rotational speed scale (12) indicates the instantaneous speed of the motor vehicle.

7. The display device according to one of the preceding claims, wherein the control device is designed to display, when the cruise control function is activated, a range above (14b) for selected cruise control setpoint speed and a range below (14a) the selected cruise control setpoint speed along a scale (12) of the speed display (10), which ranges can be utilized by a GPS-based cruise control function taking into account upcoming gradient information and altitude information of the route.

8. The display device according to Claim 7, wherein the range
a) is represented by an arc (14a, 14b), in particular an arc which is part of the circle which is described by the rotatable pointer (13) of the speed display (10); and/or
b) is marked by an upper limiting speed (16) lying above the cruise control setpoint speed and a lower limiting speed (15) lying below the cruise control setpoint speed.

9. The display device according to one of the preceding claims, wherein the automatic brake control speed display represents an automatic brake control spread range which indicates possible selectable values of the automatic brake control setpoint speed in accordance with the selected cruise control setpoint speed.

10. The display device according to one of the preceding claims, wherein the automatic brake control speed display comprises an alphanumeric value which can be displayed along a scale (12) of the speed display (10) and which indicates the magnitude of the selected automatic brake control setpoint speed.

11. A motor vehicle, in particular a utility vehicle, having a display device (1) according to the one of the preceding claims.

## Revendications

1. Dispositif d'affichage (1) d'un système d'aide à la conduite d'un véhicule automobile, comprenant une surface d'affichage (2) et un dispositif de commande (3) couplé à la surface d'affichage pour commander un affichage sur la surface d'affichage (2), dans lequel le dispositif de commande (3) est conçu pour afficher sur la surface d'affichage (2)
- un indicateur de vitesse (10) destiné à représenter une vitesse instantanée du véhicule automobile, et
- lorsqu'une fonction de limitation de vitesse est activée, un indicateur de vitesse du limiteur de vitesse (8 ; 9) destiné à représenter une vitesse de consigne réglée de la fonction de limitation de vitesse,
dans lequel l'indicateur de vitesse du limiteur de vitesse (8 ; 9) est intégré dans l'indicateur de vitesse (10) ,
**caractérisé en ce que** le dispositif de commande (3) est conçu, lorsque la fonction de limitation de vitesse et la fonction de régulation de vitesse du véhicule automobile sont activées, pour afficher sur une échelle de l'indicateur de vitesse un premier élément de marquage (11) qui marque une vitesse de consigne réglée d'une fonction de régulation de vitesse du véhicule automobile, et un deuxième élément de marquage (8) qui marque la vitesse de consigne du limiteur de vitesse, dans lequel les premier (11) et deuxième (8) éléments de marquage sont représentés visuellement différemment et diffèrent par leur couleur, leur luminosité, leur inscription et/ou leur symbole de représentation.

2. Dispositif d'affichage selon la revendication 1, dans lequel l'indicateur de vitesse du limiteur de vitesse comprend un élément de marquage (8 ; 9) pouvant être affiché le long d'une échelle (12) de l'indicateur de vitesse (10).

3. Dispositif d'affichage (1) selon l'une des revendications précédentes, dans lequel le dispositif de commande (3) est conçu pour activer ou modifier l'indicateur de vitesse du limiteur de vitesse (9) lors d'un freinage adaptatif en mode de freinage continu, en particulier sur une pente descendante.

4. Dispositif d'affichage (1) selon les revendications 2 et 3, dans lequel l'élément de marquage (8) de l'indicateur de vitesse du limiteur de vitesse, qui est affiché lorsque la fonction de régulation de vitesse est activée, peut être distingué visuellement de l'élément de marquage (9) de l'indicateur de vitesse du limiteur de vitesse, qui est affiché lorsque la fonction de régulation de vitesse est désactivée et après un freinage adaptatif.

5. Dispositif d'affichage (1) selon les revendications 2 à 4, dans lequel le dispositif de commande est conçu pour visualiser une modification de la vitesse souhaitée de la fonction de limitation de vitesse provoquée par un freinage adaptatif par un mouvement correspondant de l'élément de marquage (9) le long de l'échelle (11) de l'indicateur de vitesse (10).

6. Dispositif d'affichage (1) selon l'une des revendications précédentes, dans lequel le dispositif de commande (3) est conçu pour utiliser un instrument numérique rond destiné à afficher la vitesse instantanée, comprenant une échelle de vitesse de rotation circulaire (12), en particulier une échelle de compteur circulaire ou une échelle de compteur semi-circulaire, et une aiguille tournante (13), dont la position sur l'échelle de vitesse de rotation (12) indique la valeur de la vitesse instantanée du véhicule automobile.

7. Dispositif d'affichage selon l'une des revendications précédentes, dans lequel le dispositif de commande est conçu, lorsque la fonction de régulation de vitesse est activée, pour afficher sur une échelle (12) de l'indicateur de vitesse (10) une plage au-dessus (14b) et au-dessous (14a) de la vitesse de consigne réglée du régulateur de vitesse, laquelle plage peut être utilisée par une fonction de régulation de vitesse à base de GPS en tenant compte d'informations précédentes concernant la pente et l'altitude de l'itinéraire de conduite.

8. Dispositif d'affichage selon la revendication 7, dans lequel la plage
a) est représenté par un arc de cercle (14a, 14b), en particulier un arc de cercle qui fait partie du cercle décrit par l'aiguille tournante (13) de l'indicateur de vitesse (10) ; et/ou
b) est marquée par une vitesse limite supérieure (16) qui est supérieure à la vitesse du régulateur de vitesse et une vitesse limite inférieure (15) qui est inférieure à la vitesse du régulateur de vitesse.

9. Dispositif d'affichage selon l'une des revendications précédentes, dans lequel l'indicateur de vitesse du limiteur de vitesse représente une plage d'étalement du limiteur de vitesse qui indique des valeurs réglables possibles de la vitesse de consigne du limiteur de vitesse en fonction de la vitesse de consigne réglée du régulateur de vitesse.

10. Dispositif d'affichage selon l'une des revendications précédentes, dans lequel l'indicateur de vitesse du limiteur de vitesse comprend une valeur alphanumérique qui peut être affichée sur une échelle (12) de l'indicateur de vitesse (10) et qui indique le niveau de la vitesse de consigne réglée du limiteur de vitesse.

11. Véhicule automobile, en particulier véhicule utilitaire, comportant un dispositif d'affichage (1) selon l'une des revendications précédentes.
